# EUROPEAN PATENT APPLICATION

(11) **EP 4 407 207 A1**
(43) Date of publication of application: **31.07.2024**
(21) Application number: 23217946.5
(22) Date of filing: 19.12.2023
(51) Int. Cl.: F16F 9/02, F16F 9/43

(54) **METHOD OF FILLING A GAS SPRING AND MACHINE IMPLEMENTING THIS METHOD**

(30) Priority: 28.12.2022 IT 202200027024; 01.03.2023 IT 202300003672
(71) Applicant: Special Springs S.r.l., 36060 Romano d'Ezzelino (VI) (IT)
(72) Inventor: CAPPELLER, Augusto, 36060 ROMANO D'EZZELINO (VI) (IT); FIORESE, Massimo, 36060 ROMANO D'EZZELINO (VI) (IT); GUSELLA, Giovanni, 36060 ROMANO D'EZZELINO (VI) (IT)
(74) Representative: Studio Torta S.p.A.

(57) **Abstract**

Filling method of a gas spring (1) comprising: a hollow outer casing (2); a piston-rod (4), which is fitted in the outer casing (2) in an axially slidable manner, and is structured so as to form/delimit, together with the inner cavity (3) of the casing, a variable-volume closed chamber adapted to contain a pressurized gas; an auxiliary duct (11), which extends into the outer casing (2) so as to put the inner cavity (3) in communication with the outside and allows the pressurized gas to be introduced into the gas spring (1); and a sealing plug (12), which is adapted to seal said auxiliary duct (11) in a fluid-tight manner; said filling method comprising the steps of: creating/forming, at the mouth of the auxiliary duct (11) facing the outside of the outer casing (2), a closed volume/space that accommodates said sealing plug (12); introducing the pressurized gas inside said closed volume/space so as to pressurize also the closed cavity (3) of the outer casing (2); inserting the sealing plug (12) into the auxiliary duct (11) so as to hermetically close/seal said auxiliary duct (11); bringing said closed volume/space back to ambient pressure; and finally removing/eliminating said closed volume/space.

## Description

### CROSS-REFERENCE TO RELATED APPLICATIONS

This patent application claims priority from Italian patent application No. 102022000027024 filed on 28 December 2022, and Italian patent application No. 102023000003672 filed on 1st March 2023, the entire disclosure of which is incorporated herein by reference.

### TECHNICAL FIELD

The present invention relates to a filling method of a gas spring and a machine implementing such method.

More in detail, the present invention relates to a filling method of a gas spring suitable for use in the metal sheet forming field. Use to which the following disclosure makes explicit reference without thereby losing generality.

### BACKGROUND OF THE INVENTION

As is known, the gas springs that are used in the moulds for metal sheet forming generally comprise: a cup-shaped body substantially cylindrical in shape; a guide bushing, separate and distinct from the cup-shaped body, which closes in fluid-tight manner the mouth of the cup-shaped body by the interposition of a series of annular sealing gaskets; and a piston-rod substantially cylindrical in shape, which is fitted in pass-through and axially slidable manner in the hole in centre of the guide bushing, so as to move axially with respect to the cup-shaped body between a retracted position and an extracted or extended position.

More in detail, the piston-rod is inserted into the guide bushing in fluid-tight manner by the interposition of a series of annular sealing gaskets, so as to form/delimit, together with the cup-shaped body and the guide bushing, a variable-volume closed chamber that is filled with a high-pressure gas.

The high-pressure gas keeps the piston-rod in the extracted or extended position, i.e. with the internal flanged end of the piston-rod in abutment against the guide bushing, until the piston-rod undergoes an axial force capable of overcoming the thrust of the gas.

The bottom of the cup-shaped body is moreover provided with two straight ducts, which connect the variable-volume closed chamber with the outside and are closed in fluid-tight manner, respectively, by a one-way valve (also called a non-return valve) and by a safety plug.

The one-way valve is oriented so as to allow the pressurized gas to enter the variable-volume closed chamber and is crossed by the pressurized gas during the filling of the gas spring.

The safety plug, on the other hand, is structured so as to automatically discharge the pressurized gas outside of the gas spring when the piston-rod performs an "overtravel", i.e. when the piston-rod enters into the cup-shaped body exceeding the maximum stroke allowed by the dimensions of the gas spring.

Unfortunately, the one-way valve has relatively high production costs. In addition, realization of the receiving seat of the one-way valve and mounting of the same valve have relatively high costs that contribute to significantly raising the overall production costs of the gas spring.

### SUMMARY OF THE INVENTION

Aim of the present invention is to reduce the production costs of the gas springs.

In accordance with these aims, according to the present invention there is provided a filling method of a gas spring as defined in claim 1 and preferably, though not necessarily, in any one of the claims depending on it.

According to the present invention, it is moreover realized a filling machine for gas springs as defined in claim 8 and preferably, though not necessarily, in any one of the claims depending on it.

Finally, according to the present invention it is realized a gas spring as defined in claim 17.

### BRIEF DESCRIPTION OF THE DRAWINGS

The present invention will now be described with reference to the accompanying drawings, which show a nonlimiting embodiment thereof, wherein:
- Figure 1 is a perspective view of a gas spring realized according to the teachings of the present invention, with parts removed for clarity's sake;
- Figure 2 is a side view of the gas spring shown in Figure 1, sectioned along the midplane and with parts removed for clarity's sake;
- Figure 3 is a perspective view of the gas spring shown in Figures 1 and 2 suitably coupled to a corresponding filling machine realized according to the teachings of the present invention;
- Figure 4 is a perspective view of the machine shown in Figure 3, with parts in section and parts removed for clarity's sake;
- Figures from 5 to 11 show schematically some steps of the filling of the gas spring shown in Figures 1 and 2; whereas
- Figure 12 is a side view, with parts in section and parts removed for clarity's sake, of a variant embodiment of the gas spring shown in Figures 1 and 2 and of the related filling machine.

### DETAILED DESCRIPTION OF THE EMBODIMENTS

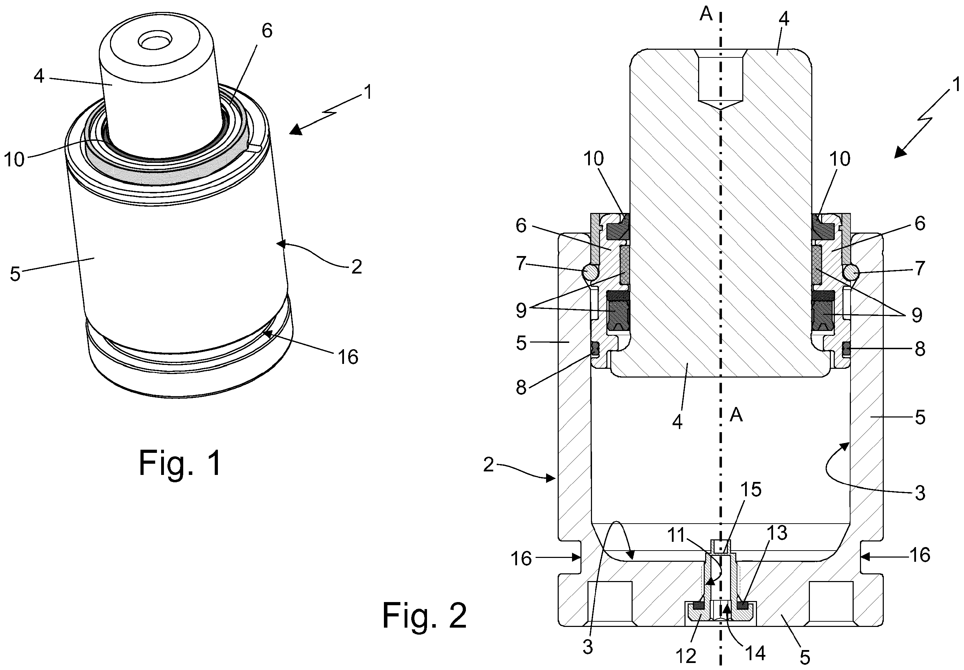

With reference to Figures 1 and 2, number 1 denotes as a whole a gas spring that can be advantageously used in the presses or moulds for the cold forming of metal sheets and the like.

The gas spring 1 comprises: an outer casing 2 with a rigid and self-supporting structure, which is internally provided with a large, advantageously complementary-shaped, closed cavity 3 which is isolated from the outside; and an oblong-shaped, piston-rod 4 which is fitted in the outer casing 2 in axially slidable and fluid-tight manner, normally protrudes cantilevered outside of the casing 2, and is shaped /structured so as to form/delimit, together with the cavity 3 of casing 2, a variable-volume closed chamber that contains or is adapted to contain nitrogen or other pressurized gas.

More in detail, the piston-rod 4 is fitted in axially slidable and fluid-tight manner in a substantially complementary-shaped, straight hole that is realized in the outer casing 2 so as to connect the cavity 3 directly with the outside. Preferably the piston-rod 4 is moreover shaped/ structured so as to also protrude cantilevered inside the closed cavity 3.

In addition, the part of piston-rod 4 that remains stably within the casing 2, or rather protrudes cantilevered inside the closed cavity 3, is preferably provided with an anti-extraction structure which is adapted to prevent the complete coming out of the piston-rod 4 from the casing 2 due to the thrust exerted by the pressurized gas.

The pressurized gas present within the closed cavity 3, or rather within the variable-volume closed chamber, in turn has a pressure higher than the external one, so as to maximize the volume of the closed chamber.

In other words, the pressurized gas present within the closed cavity 3, or rather within the variable-volume closed chamber, is adapted to bring and hold the piston-rod 4 in an extracted or extended position (see Figures 1 and 2), in which the anti-extraction structure of piston-rod 4 abuts against the inner surface of cavity 3.

In the example shown, in particular, the nominal pressure (i.e. the pressure of the gas with the piston-rod 4 in the extracted or extended position) of the gas contained in the cavity 3, or rather in the variable-volume closed chamber, preferably ranges between 20 and 350 bar.

With reference to Figures 1 and 2, in particular, the outer casing 2 is preferably substantially cylindrical in shape and is preferably made of metallic material. Similarly the closed cavity 3 is preferably substantially cylindrical in shape and preferably extends within the casing 2 substantially coaxial to the longitudinal/central axis A of the same casing 2.

The piston-rod 4, in turn, is preferably substantially cylindrical in shape, is preferably made of metallic material, and preferably extends substantially coaxial to the longitudinal/central axis A of casing 2.

More in detail, with reference to Figures 1 and 2, the outer casing 2 preferably comprises: a cup-shaped body 5 advantageously substantially cylindrical in shape, which preferably has a monolithic structure and is preferably also made of metallic material; and a guide bushing 6, separate and distinct from the cup-shaped body 5, which is rigidly and fluid-tightly fixed inside the cup-shaped body 5, preferably substantially at the mouth of the same cup-shaped body 5, and is engaged in pass-through and axially slidable manner by the piston-rod 4.

In other words, the guide bushing 6 is provided with a preferably circular-shaped, central through hole that is engaged in pass-through and axially slidable manner by the piston-rod 4.

More in detail, the guide bushing 6 preferably has a monolithic structure and is preferably made of metallic material.

The guide bushing 6, in addition, preferably has a shape substantially complementary to that of the mouth of the cup-shaped body 5, and is preferably locked within the cup-shaped body 5 by means of an elastic locking ring 7 advantageously made of metallic material.

Preferably, the guide bushing 6 is moreover coupled to the cup-shaped body 5 in a fluid-tight manner by the interposition of at least one annular sealing gasket 8 advantageously made of polymeric material, which is adapted to prevent the leakage of the pressurized gas between the casing 2 and the guide bushing 6.

The piston-rod 4, in turn, preferably has a monolithic structure, is preferably coupled to the guide bushing 5 in a fluid-tight manner by the interposition of at least one or, more conveniently, a plurality of annular sealing gaskets 9 that are adapted to prevent the leakage of the pressurized gas between the piston-rod 4 and the guide bushing 5, and are advantageously made of polymeric material.

More in detail, in the example shown the piston-rod 4 preferably consists of a substantially constant-section straight bar, which is preferably substantially cylindrical in shape and has, at the axial end that is stably located within the closed cavity 3, a protruding annular flange that is adapted to prevent the complete extraction of the straight bar from the outer casing 2.

In addition, the gas spring 1 is preferably also provided with an annular oil-scraper gasket 10 advantageously made of polymeric material, which is interposed between the casing 2, or rather the guide bushing 6, and the piston-rod 4 preferably near the mouth of the straight hole engaged by the piston-rod 4, and is adapted to prevent oil and/or dirt from entering the casing 2.

With reference to Figure 2, the gas spring 1 is furthermore provided with an auxiliary duct 11, which extends into the outer casing 2, or rather into the cup-shaped body 5, so as to put the inner cavity 3, or rather the variable-volume closed chamber, in direct communication with the outside, and allows the pressurized gas to be introduced into the gas spring 1; and with a sealing plug 12, which is preferably made of metallic material, and is inserted in the auxiliary duct 11 so as to close/seal the same duct in a fluid-tight manner, i.e. hermetically. Preferably the plug 12 is moreover inserted into the auxiliary duct 11 in an easily removable manner.

More in detail, the plug 12 is preferably structured so as to be at least partially screwed into the auxiliary duct 11.

Unlike the currently known gas springs, in addition, the auxiliary duct 11 is preferably the one and only duct connecting the cavity 3 of casing 2 with the outside.

Furthermore, unlike the currently known gas springs, the auxiliary duct 11 does not accommodate a one-way valve adapted to allow pressurized gas to solely flow towards the closed cavity 3 of casing 2, or rather towards the variable-volume closed chamber.

In other words, the gas spring 1 lacks a one-way valve that controls the flow of the pressurized gas along the auxiliary duct 11, or rather allows the flow of the pressurized gas in direction of cavity 3.

Preferably, the gas spring 1 additionally comprises an annular sealing gasket 13, which is advantageously made of polymeric material, and is interposed between the outer casing 2, or rather the cup-shaped body 5, and the plug 12 so as to prevent the leakage of the pressurized gas along the auxiliary duct 11.

In other words, the auxiliary duct 11 is engaged only by the plug 12, advantageously by the interposition of the annular gasket 13.

More in detail, with particular reference to Figure 2, the auxiliary duct 11 is preferably substantially straight and is preferably located in the casing 2 on the opposite side with respect to the straight hole engaged in axially slidable manner by the piston-rod 4, i.e. on the bottom of cup-shaped body 5.

Preferably, the auxiliary duct 11 moreover extends into the wall of the outer casing 2, or rather of the cup-shaped body 5, parallel to the longitudinal axis of the piston-rod 4, i.e. parallel to the longitudinal/central axis A of casing 2.

In the example shown, in particular, the auxiliary duct 11 is preferably coaxial to the longitudinal axis of piston-rod 4 and to the longitudinal/central axis A of casing 2.

With reference to Figure 2, preferably the plug 12 is furthermore a safety plug.

More in detail, the plug 12 is fitted into the auxiliary duct 11 so as to protrude within the cavity 3, in order to be reached/touched by the piston-rod 4 when it performs an "overtravel", i.e. when the piston-rod enters into the casing 2 exceeding the maximum stroke allowed by the dimensions of the gas spring 1. In addition, the plug 12 is structured so as to allow the pressurized gas to freely pass along the auxiliary duct 11, only after being touched by the piston-rod 4.

In other words, when it is touched/struck by the piston-rod 4, the plug 12 is structured so as to automatically discharge the pressurized gas present within the closed cavity 3 of casing 2 to the outside of the gas spring 1.

More in detail, the plug 12 is oblong in shape and is preferably screwed into the auxiliary duct 11 so that its distal/terminal segment protrudes cantilevered from the bottom of cup-shaped body 5, in order to be struck by the body of piston-rod 4 during an "overtravel".

In addition, the plug 12 is preferably provided, on its inside, with a longitudinal discharge duct that passes through the plug substantially for the entire length and is hermetically closed by a breakable portion of the plug, which is specifically structured to be able to crack or break when the plug 12 is struck/touched by the piston-rod 4.

With reference to Figure 2, in the example shown, in particular, the plug 12 preferably has a mushroom structure, and is screwed into the auxiliary duct 11, preferably so as to bring its head in abutment against the outer casing 2, or rather against the cup-shaped body 5. The annular sealing gasket 13 is preferably interposed between the outer casing 2, or rather the cup-shaped body 5, and the head of the plug 12.

Preferably, the plug 12 is moreover dimensioned so that its threaded shank protrudes cantilevered within the closed cavity 3, or rather within the variable-volume closed chamber.

In addition, the plug 12 preferably has, within the threaded shank, a longitudinal duct 14, which extends coaxial or parallel to the plug longitudinal axis substantially for the entire length of plug 12, and is hermetically closed by an advantageously discoidal in shape, thin transversal breakable septum 15 which is preferably located close to or at the distal end of the plug threaded shank, and is specifically structured to break/fracture when the distal end of the threaded shank is struck by the piston-rod 4.

Preferably, the breakable septum 15 is moreover dimensioned so as to autonomously break/fracture when the pressure within the cavity 3 exceeds a predetermined limit value, advantageously ranging between 500 and 600 bar.

The filling method of gas spring 1 with the pressurized gas basically entails the step of injecting/introducing the pressurized gas into the cavity 3 through the auxiliary duct 11, and then the step of inserting the plug 12 into the auxiliary duct 11 so as to hermetically close the auxiliary duct 11 and prevent the subsequent coming out of the pressurized gas through the same duct.

More in detail, the filling method of gas spring 1 with the pressurized gas comprises the steps of: creating/ forming, at the mouth of the auxiliary duct 11 facing the outside of casing 2, a closed volume/space that accommodates the plug 12; introducing the pressurized gas into said closed volume/space so as to pressurize also the cavity 3 of casing 2 and advantageously bring the piston-rod 4 back into the extended/extracted position; inserting the sealing plug 12 into the auxiliary duct 11 so as to hermetically close/seal the auxiliary duct 11; bringing said closed volume/space back to the ambient pressure; and finally removing/ eliminating said closed volume/space.

In addition, the step of inserting the plug 12 into the auxiliary duct 11 of casing 2 preferably entails screwing the sealing plug 12 into the auxiliary duct 11 up to seal the auxiliary duct 11 in fluid-tight manner.

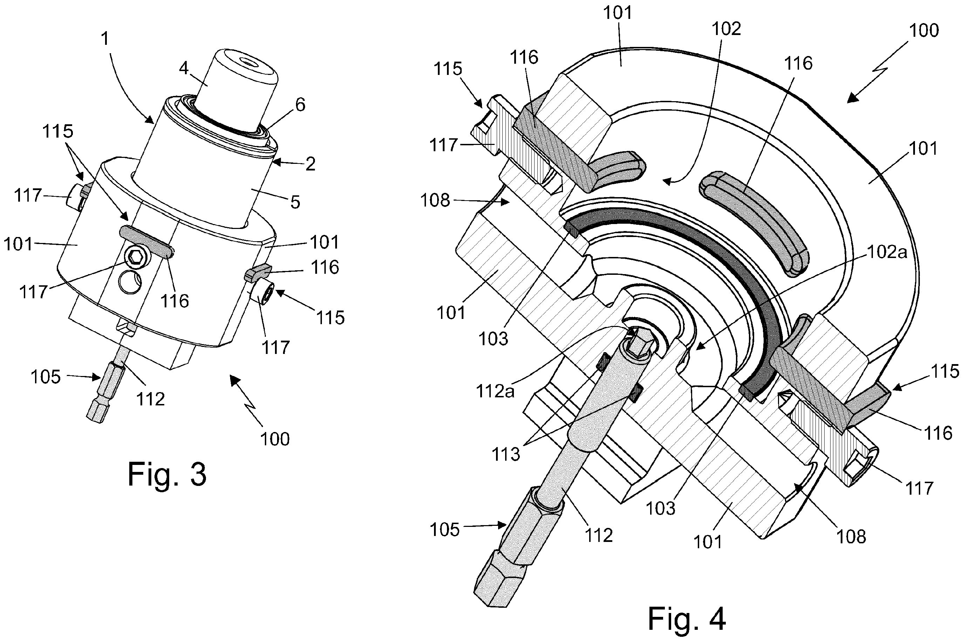

With reference to Figures 3 to 11, in particular the filling of gas spring 1, or rather of the inner cavity 3 of casing 2, with the pressurized gas is preferably carried out with the aid of a gas-springs filling machine 100, which firstly comprises a rigid machine body 101 preferably with monolithic structure, which is advantageously made of metallic material and is provided with a receiving seat 102 that is adapted to be engaged, in fluid-tight and easily removable manner, by the part of the outer casing 2 of gas spring 1 in which the mouth of auxiliary duct 11 is located. The receiving seat 102 is moreover shaped/structured so as to form, together with the casing 2 that engages the same receiving seat 102, a closed space/volume of such dimensions to accommodate the plug 12 of gas spring 1.

More in detail, the receiving seat 102 preferably has a shape substantially complementary to the part of the outer casing 2 in which the mouth of auxiliary duct 11 is located, i.e. to the lower part of the cup-shaped body 5, and moreover has, on the bottom, a recess or depression 102a, which is locally substantially aligned to the mouth of the auxiliary duct 11 of casing 2, and is dimensioned so as to form, together with the casing 2 above, said closed space/volume of such dimensions to accommodate the plug 12.

In addition, the filling machine 100 is preferably also provided with at least one annular sealing gasket 103 advantageously made of polymeric material, which is located inside the receiving seat 102, and is adapted to interpose itself between the outer casing 2 of gas spring 1 and the machine body 101 so as to prevent the leakage of the pressurized gas between the outer casing 2 and the machine body 101.

In the example shown, in particular, the receiving seat 102 is preferably substantially cylindrical in shape and complementary to the lower part of cup-shaped body 5. The recess or depression 102a, in turn, is preferably substantially cylindrical in shape and is preferably realized on the bottom of receiving seat 102, roughly in the centre of the same seat, so as to be locally aligned to the mouth of the auxiliary duct 11 of casing 2.

Preferably, the recess or depression 102a is moreover shaped and dimensioned so as to accommodate the head and advantageously also at least a part of the threaded shank of the sealing plug 12.

The annular sealing gasket 103, in turn, is preferably placed on the bottom of receiving seat 102, so as to surround the mouth of the recess or depression 102a and at the same time interpose between the outer casing 2 and the machine body 101.

More in detail, the annular sealing gasket 103 is preferably located in an annular groove surrounding the mouth of recess 102a.

With reference to Figures 3 to 11, the filling machine 100 moreover comprises: a pressurization system 104, which communicates with the receiving seat 102 in the machine body 101, or rather with the recess 102a, and is adapted to introduce, on command, nitrogen or other pressurized gas into the receiving seat 102, or rather into the recess 102a; and an inserting device 105, which is at least partially located within the receiving seat 102, or rather within the recess 102a, facing/aligned to the mouth of the auxiliary duct 11 of the gas spring 1 engaging the receiving seat 102, and is adapted to insert and lock, on command, the plug 12 into the auxiliary duct 11 of the gas spring 1 engaging the receiving seat 102, so as to hermetically close said auxiliary duct 11.

More in detail, the pressurization system 104 is preferably structured so as to selectively and alternatively introduce nitrogen or other pressurized gas inside the receiving seat 102, or rather inside the recess 102a, so as to bring and keep the closed space/volume delimited by the outer casing 2 and by the receiving seat 102 at a predetermined pressure; or putting the receiving seat 102, or rather the recess 102a, in communication with the outside, so as to bring and keep the closed space/volume delimited by the outer casing 2 and by the receiving seat 102 at the ambient/external pressure.

The inserting device 105, on the other hand, is preferably adapted to screw the plug 12 into the auxiliary duct 11 of casing 2, so as to hermetically close the auxiliary duct 11.

In addition, the filling machine 100 is preferably also provided with mechanical retaining means, which are adapted to hold the casing 2 of gas spring 1 firmly in place within the receiving seat 102 of the machine body 101.

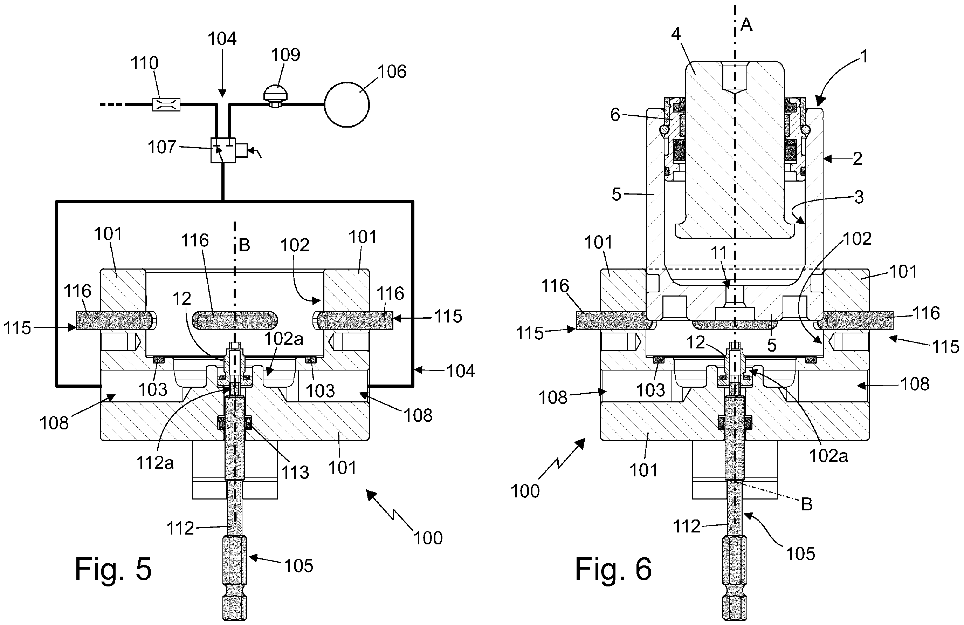

With reference to Figure 5, in the example shown, in particular, the pressurization system 104 preferably comprises: a source of pressurized gas 106 such as, for example, a high-pressure nitrogen cylinder or the like; and a three-way valve 107, which is adapted to put the receiving seat 102 of machine body 101, or rather the recess 102a, in communication, selectively and alternatively, with the source of pressurized gas 106 or with the external environment.

More in detail, the three-way valve 107 is provided with an inlet and two outlets, and is structured so as to put, on command, the inlet of the valve in direct communication alternately with each of the two outlets of the same valve.

The inlet of three-way valve 107 communicates with the receiving seat 102, or rather with the recess 102a, by means of one or more connection ducts 108 made in the machine body 101. The two outlets of three-way valve 107, on the other hand, communicate one with the source of pressurized gas 106 and the other with the external environment.

Preferably, the pressurization system 104 also comprises a pressure regulator 109 and/or a flow reducer 110.

The pressure regulator 109 is preferably interposed between the source of pressurized gas 106 and the three-way valve 107, and is advantageously adapted to bring/reduce the pressure of the gas flowing towards the three-way valve 107 up to a predetermined value.

The flow reducer 110, on the other hand, is preferably interposed between the three-way valve 107 and the external environment, and is advantageously adapted to limit the flowrate of gas flow directed outwards.

With reference to Figures 3 to 11, on the other hand, the inserting device 105 preferably comprises a straight shaft or rod 112 advantageously made of metallic material, which has the distal end 112a shaped so as to support and hold in releasable manner the plug 12 of gas spring 1, and is inserted/accommodated in the machine body 101 so that its distal end 112a protrudes or can protrude into the receiving seat 102 of machine body 101, or rather into the recess 102a, while remaining locally substantially aligned, or rather coaxial, to the mouth of the auxiliary duct 11 of the gas spring 1 engaging the receiving seat 102.

In more detail, the distal end 112a of straight shaft or rod 112 is preferably shaped so as to be able to couple in angularly rigid manner to the plug 12.

The straight shaft or rod 112, in addition, is coupled to the machine body 101 in axially rotatable and/or slidable manner, so as to be able to axially move and/or rotate the plug 12 arranged on the distal end 112a, inside the receiving seat 102, or rather inside the recess 102a, and thus insert the plug 12 into the auxiliary duct 11 of casing 2.

Preferably, the inserting device 105 moreover comprises a driving member (not shown in the Figures), which is capable of rotating and/or axially moving the straight shaft or rod 112 relative to the machine body 101, so as to insert the plug 12 stationary on the distal end 112a of the straight shaft 112 into the auxiliary duct 11 of gas spring 1.

More in detail, the straight shaft or rod 112 is preferably arranged substantially coaxial to the longitudinal/ central axis B of the receiving seat 102 of machine body 101.

In addition, the straight shaft or rod 112 is preferably dimensioned to protrude cantilevered outside the machine body 101, and is preferably coupled to the machine body 101 in a substantially fluid-tight manner.

More in detail, the filling machine 100 is preferably provided with a second annular sealing gasket 113 advantageously made of polymeric material, which is interposed between the machine body 101 and the straight shaft or rod 112, so as to prevent the leakage of the pressurized gas along the hole engaged in axially rotatable and slidable manner by the straight shaft or rod 112.

The driving member, on the other hand, is preferably located outside of machine body 101, advantageously on the opposite side with respect to the receiving seat 102, and is preferably structured so as to screw the threaded shank of plug 12 into the auxiliary duct 11 of casing 2.

In the example shown, in particular, the distal end 112a of the straight shaft or rod 112 is preferably shaped so as to fit in angularly rigid manner into the mouth of the discharge duct 14 of plug 12.

The driving member, on the other hand, is preferably an electric screwdriver that is selectively couplable to the shank of the straight shaft or rod 112.

Clearly the straight shaft or rod 112 of inserting device 105 may also be axially moved and/or rotated manually by a person.

With reference to Figures 3 to 11, on the other hand, the retaining means preferably include a coupling assembly 115, which is preferably arranged/mounted movable on the machine body 101, and is adapted to selectively lock the casing 2 that engages the receiving seat 102, rigidly to the machine body 101.

More in detail, the coupling assembly 115 preferably comprises a series of anchoring devices, which are arranged on the machine body 101 suitably spaced around the receiving seat 102, and are adapted to tighten or interlock in releasable manner on the outer casing 2 of gas spring 1, so as to hold the gas spring 1 inside the receiving seat 102.

Preferably the anchoring devices are moreover latch-like anchoring devices, and are advantageously adapted to engage an annular groove 16 present on the outer surface of casing 2, or rather on the outer surface of cup-shaped body 5.

With reference to Figure 4, in the example shown, in particular, each anchoring device preferably comprises: an oblong-shaped, movable latch 116 which is inserted in axially slidable manner in the machine body 101, and is movable between an extracted position (see Figures 4 and 7 to 10) in which the latch 116 protrudes cantilevered into the receiving seat 102 so as to engage the outer casing 2 of gas spring 1, and a retracted position (see Figures 5, 6 and 11) in which the latch 116 does not protrude cantilevered into the receiving seat 102 so as to allow the free insertion and extraction of the outer casing 2 from the receiving seat 102; and optionally also a locking mechanism, which is adapted to bring and/or hold the latch 116 firmly in the extracted position.

More in detail, the latch 116 is preferably movable in the machine body 101 orthogonally to the longitudinal/ central axis B of receiving seat 102, and is preferably shaped/dimensioned to protrude cantilevered also outside the machine body 101, i.e. on the opposite side with respect to the receiving seat 102.

The locking mechanism, on the other hand, preferably comprises a safety screw 117, which is screwed into the machine body 101 alongside and parallel to the latch 116, so as to arrange its head in abutment on the rear end of the latch 116, so as to push and/or hold the latch 116 in the extracted position.

With reference to Figures 5 to 11, the filling method of the cavity 3 of gas spring 1 preferably comprises the steps of:
- arranging the plug 12 inside the housing seta 102 of the filling machine 100, or rather inside the recess 102a;
- inserting the part of the casing 2 of gas spring 1 where the mouth of auxiliary duct 11 is located, i.e. the bottom of cup-shaped body 5, into the receiving seat 102, so as to hermetically close the receiving seat 102 and form a closed space/volume that accommodates the plug 12;

- introducing nitrogen or other pressurized gas into the receiving seat 102, or rather into the recess 102a, so as to bring the closed space/volume accommodating the plug 12 and the adjacent closed cavity 3 of gas spring 1 to a predetermined pressure;
- inserting the plug 12 into the auxiliary duct 11 of gas spring 1 so as to hermetically close the inner cavity 3 of gas spring 1;
- depressurizing the receiving seat 102 of the filling machine 100, or rather the recess 102a, so as to bring the closed space/volume delimited by the casing 2 and the machine body 101 back to the ambient pressure; and finally
- removing the casing 2 from the receiving seat 102 of the machine body 101 of filling machine 100.

More in detail, with reference to Figures 5, the filling method of gas spring 1 preferably comprises the step of placing the plug 12 into the receiving seat 102 of filling machine 100, or rather into the recess 102a, on the inserting device 105, or rather onto the distal end 112a of the straight rod 112.

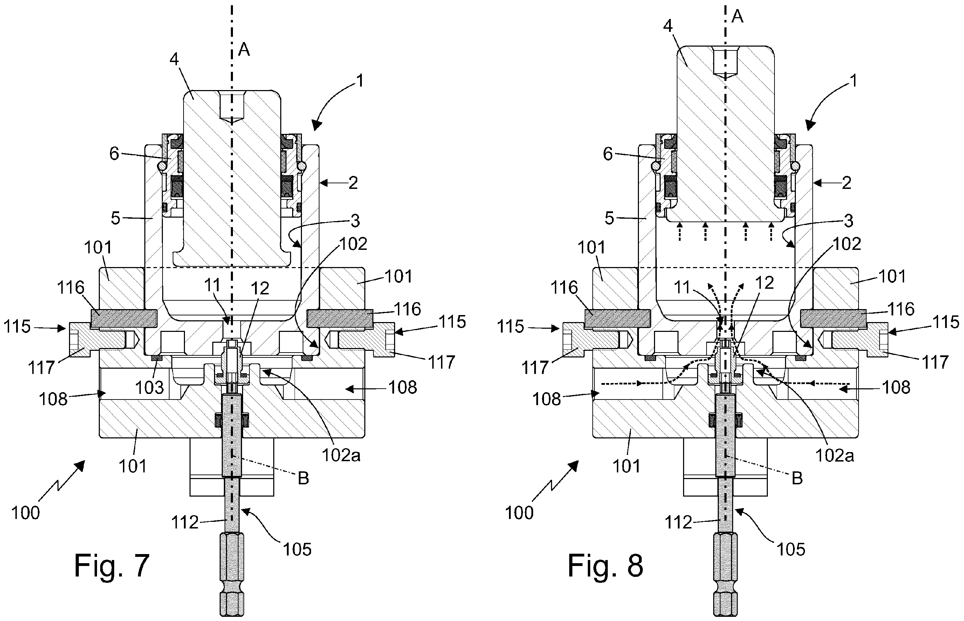

With reference to Figures 6 and 7, after having placed the plug 12 inside the receiving seat 102 of the filling machine 100, or rather inside the recess 102a, the filling method of gas spring 1 preferably comprises the step of inserting the part of casing 2 where the mouth of the auxiliary duct 11 is located into the receiving seat 102, so as to hermetically close the receiving seat 102; and then the step of anchoring, by means of the coupling assembly 115, the casing 2 of gas spring 1 to the filling machine 100, so as to hold the same casing 2 firmly in place within the receiving seat 102.

More in detail, the filling method of gas spring 1 preferably entails moving and optionally also locking the latches 116 in the extracted position, so that the front ends of the latches 116 engage the outer annular groove 16 of casing 2.

With reference to Figure 8, after having placed and advantageously also locked the casing 2 of gas spring 1 in place within the receiving seat 102, the filling method of gas spring 1 preferably comprises the step of operating the pressurization system 104, or rather the three-way valve 107, so as to introduce nitrogen or other pressurized gas into the closed volume/space delimited by the casing 2 and the machine body 101, while also filling the cavity 3 of casing 2.

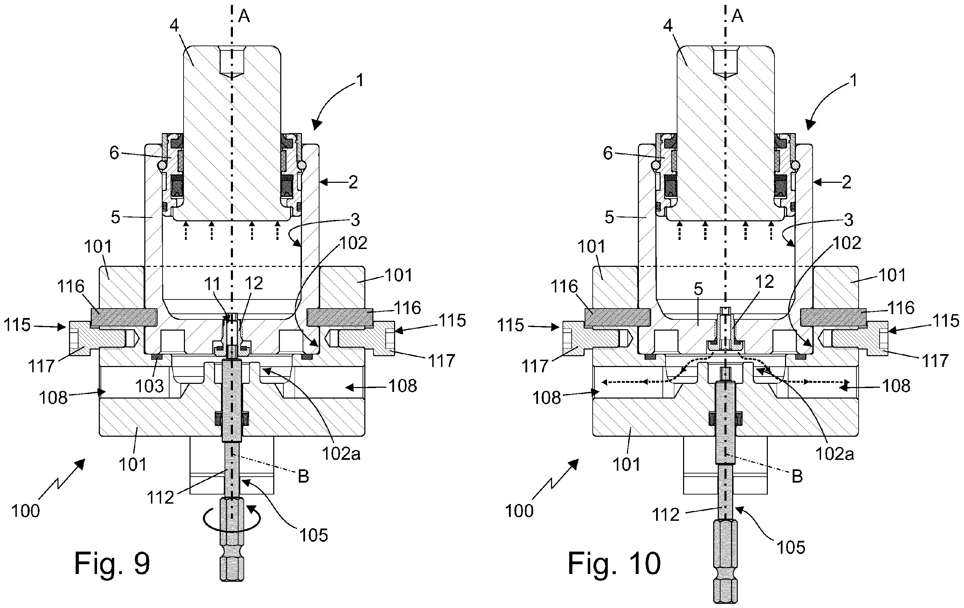

With reference to Figure 9, after having filled the cavity 3 of casing 2 with the pressurized gas, the filling method of gas spring 1 preferably comprises the step of operating the inserting device 105 so as to insert, or rather screw, the plug 12 into the auxiliary duct 11 of casing 2, so as to hermetically close the cavity 3.

More in detail, the filling method of gas spring 1 preferably entails axially moving and rotating the straight shaft or rod 112, so as to screw the threaded shank of plug 12 into the auxiliary duct 11 of casing 2 up to bring the head of the plug 12 in abutment against the surface of casing 2, and advantageously then also applying a predetermined tightening torque.

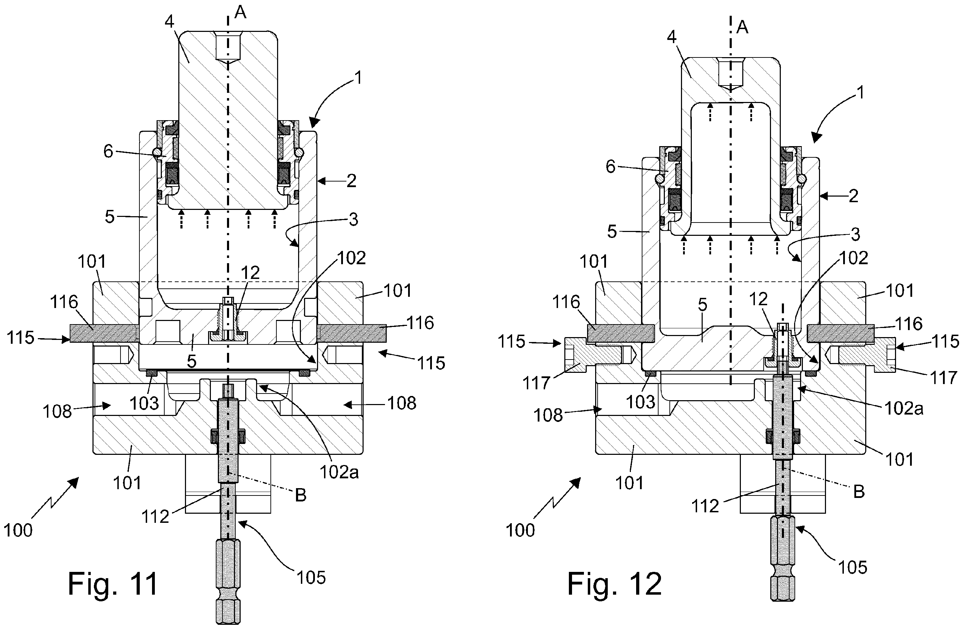

With reference to Figures 10 and 11, after having isolated the cavity 3 of casing 2 from the receiving seat 102, the filling method of gas spring 1 preferably comprises the step of operating the pressurization system 104, or rather the three-way valve 110, so as to bring the receiving seat 102 back to ambient pressure; and then the step of operating the coupling assembly 115 so as to release the casing 2 from the machine body 101.

More in detail, the filling method of gas spring 1 preferably entails unlocking and moving the latches 116 into the retracted position, so as to release the casing 2 from the machine body 101.

With reference to Figure 11, after having depressurized the receiving seat 102 and advantageously also having released the casing 2 from the machine body 101, the filling method of gas spring 1 preferably comprises the step of extracting the casing 2 from the receiving seat 102 of filling machine 100.

The advantages connected with the filling method of gas spring 1 described above are remarkable.

The new filling method, in fact, allows to eliminate the one-way valve and this fact allows to reduce the production costs of the gas spring. The one-way valve of the gas spring, in fact, is one of the most expensive components.

Finally, it is clear that modifications and variations may be made to the gas spring 1, the filling method of gas spring 1, and the filling machine 100 without, however, departing from the scope of the present invention.

For example, the outer casing 2 of gas spring 1 may have a monolithic structure.

The plug 12, moreover, may have the shape of a grub screw.

With reference to Figure 12, in addition, in a more sophisticated embodiment of gas spring 1, the piston-rod 4 may be cup-shaped and be inserted into the guide bushing 6 with the concavity turned towards the cup-shaped body 5.

In this embodiment, the auxiliary duct 11 is made in the casing 2 so as to be aligned with the flanged perimeter edge of piston-rod 4. In other words, the auxiliary duct 11 is made eccentrically with respect to the longitudinal/central axis A of casing 2.

In the filling machine 100, on the other hand, the straight shaft or rod 112 of inserting device 105 is preferably inserted/accommodated in the machine body 101 in an eccentric position with respect to the longitudinal/ central axis B of the receiving seat 102 of machine body 101, clearly always locally aligned to the mouth of the auxiliary duct 11 of gas spring 1.

## Claims

1. A filling method of a gas spring (1) which comprises:
an outer casing (2) which is internally provided with a closed cavity (3); and a piston-rod (4), which is fitted in the outer casing (2) in axially slidable manner, and is structured so as to form/delimit, together with said closed cavity (3), a variable-volume closed chamber adapted to contain a pressurized gas;
the gas spring (1) being additionally provided with an auxiliary duct (11), which extends into the outer casing (2) so as to put the closed cavity (3) in communication with the outside and allows the pressurized gas to be introduced into the closed cavity (3); and with a sealing plug (12) adapted to seal said auxiliary duct (11) in a fluid-tight manner;
said filling method being **characterized by** comprising the steps of: creating/forming, at the mouth of the auxiliary duct (11) facing the outside of the outer casing (2), a closed volume/space that accommodates said sealing plug (12); introducing the pressurized gas into said closed volume /space so as to pressurize also the closed cavity (3) of the outer casing (2); inserting the sealing plug (12) into the auxiliary duct (11) so as to hermetically close/seal said auxiliary duct (11); bringing said closed volume/space back to ambient pressure; and finally removing/eliminating said closed volume/space.

2. The filling method of a gas spring according to Claim 1, wherein the step of inserting the sealing plug (12) into the auxiliary duct (11) entails the step of screwing the sealing plug (12) into the auxiliary duct (11) up to seal the same auxiliary duct (11).

3. The filling method of a gas spring according to Claim 1 or 2, wherein the sealing plug (12) is inserted into the auxiliary duct (11) so as to protrude within said closed cavity (3), in order to be reachable by the piston-rod (4) when performing an overtravel.

4. The filling method of a gas spring according to Claim 1, 2 or 3, wherein said sealing plug (12) is structured so as to allow pressurized gas to pass along the auxiliary duct (11) after being touched by the piston-rod (4).

5. The filling method of a gas spring according to claim 4, wherein the sealing plug (12) is provided with a longitudinal discharge duct (14) that passes through the plug and is hermetically closed by a plug breakable portion (15) which is adapted to crack or break when the sealing plug (12) is struck/touched by the piston-rod (4).

6. The filling method of a gas spring according to any one of the preceding claims, wherein said auxiliary duct (11) does not accommodate a one-way valve adapted to allow pressurized gas to flow solely towards said closed cavity (3) .

7. The filling method of a gas spring according to any one of the preceding claims, wherein said auxiliary duct (11) is the one and only duct connecting said closed cavity (3) to the outside.

8. A filling machine (100) of gas springs that comprise: an outer casing (2) which is internally provided with a closed cavity (3); a piston-rod (4) which is fitted in the outer casing (2) in axially slidable manner, and is structured so as to form/delimit, together with said closed cavity (3), a variable-volume closed chamber adapted to contain a pressurized gas; an auxiliary duct (11), which extends into the outer casing (2) so as to put the closed cavity (3) in communication with the outside, and allows the pressurized gas to be introduced into the closed cavity (3); and a sealing plug (12) adapted to seal said auxiliary duct (11) in a fluid-tight manner;
said filling machine (100) being **characterized by** comprising: a machine body (101) provided with a receiving seat (102), which is adapted to be engaged, in a removable and fluid-tight manner, by the part of the outer casing (2) of the gas spring (1) in which the mouth of the auxiliary duct (11) is located, and is shaped/structured so as to form, together with the outer casing (2) engaging the same receiving seat (102), a closed space/volume of such dimensions to accommodate the sealing plug (12) of the gas spring (1); a pressurization system (104) that communicates with the receiving seat (102) and is adapted to introduce a pressurized gas inside the same receiving seat (102); and an inserting device (105) that is at least partially located within said receiving seat (102) substantially aligned to the mouth of the auxiliary duct (11) of the gas spring (1) engaging the receiving seat (102), and is adapted to insert and lock the sealing plug (12) into the auxiliary duct (11) of the gas spring (1) engaging the receiving seat (102), so as to hermetically close said auxiliary duct (11).

9. The filling machine according to Claim 8, wherein said pressurization system (104) is structured so as to selectively and alternatively introduce the pressurized gas into the receiving seat (102) of the machine body (101), or put said receiving seat (102) in communication with the outside.

10. The filling machine according to Claim 8 or 9, **characterized by** additionally comprising mechanical retaining means (115) adapted to hold the outer casing (2) of the gas spring (1) firmly in place within the receiving seat (102) of the machine body (101).

11. The filling machine according to Claim 8, 9 or 10, wherein the inserting device (105) is adapted to screw the sealing plug (12) into the auxiliary duct (11) of the casing (2) .

12. The filling machine according to Claim 11, wherein the inserting device (105) comprises a straight rod (112) that has the distal end (112a) shaped so as to support and hold in releasable manner the sealing plug (12) of the gas spring (1), is accommodated in the machine body (101) so that its distal end (112a) cantilevered protrudes or can protrude into the receiving seat (102) while remaining locally aligned to the mouth of the auxiliary duct (11) of the gas spring (1), and is coupled to the machine body (101) in axially rotatable and/or slidable manner.

13. The filling machine according to Claim 12, wherein the inserting device (105) additionally comprises a driving member adapted to rotate and/or axially move the straight rod (112) relative to the machine body (101).

14. The filling machine according to Claim 12 or 13, wherein the straight rod (112) is coupled to the machine body (101) in a fluid-tight manner.

15. The filling machine according to Claim 12, 13 or 14, wherein the straight rod (112) protrudes outside the machine body (101).

16. The filling machine according to any one of Claims 10 to 15, wherein the mechanical retaining means comprise a plurality of latch-like anchoring devices (115) that are arranged on the machine body (101) suitably spaced around the receiving seat (102), and are adapted to clench or interlock in releasable manner on the outer casing (2) of said gas spring (1).

17. A gas spring (1) comprising: an outer casing (2) having a closed cavity (3) therein; a piston-rod (4) which is fitted in the outer casing (2) in axially slidable manner, and is structured so as to form/delimit, together with said closed cavity (3), a variable-volume closed chamber adapted to contain a pressurized gas; an auxiliary duct (11), which extends into the outer casing (2) so as to put the closed cavity (3) in communication with the outside and allows the pressurized gas to be introduced into said closed cavity (3); and a sealing plug (12) adapted to seal said auxiliary duct (11) in a fluid-tight manner;
said gas spring (1) being **characterized in that** it lacks a one-way valve that controls the flow of pressurized gas along said auxiliary duct (11).

18. The gas spring according to claim 17, wherein said auxiliary duct (11) is the one and only duct connecting the closed cavity (3) with the outside.
